# EUROPEAN PATENT SPECIFICATION

(11) **EP 0 981 723 B1**
(45) Date of publication and mention of the grant of the patent: **10.08.2005**
(21) Application number: 98919382.6
(22) Date of filing: 05.05.1998
(51) Int. Cl.: G01F 15/00, G07F 15/00

(54) **METERING SYSTEMS**
MESSSYSTEME
INSTALLATIONS DE COMPTAGE

(30) Priority: 12.05.1997 GB 9709604
(43) Date of publication of application: 01.03.2000
(73) Proprietor: Landis+Gyr Limited, Telford Shropshire TF1 7YG (GB)
(72) Inventor: RICCI, Francesco, Giovanni, Heath Shropshire SY4 4LR (GB)
(74) Representative: Humphrey-Evans, Edward John
(86) International application number: PCT/GB1998/001296
(87) International publication number: WO 1998/052003

(56) References cited:
- EP-A- 0 092 436
- WO-A-96/03720
- WO-A-96/03721
- GB-A- 2 295 443

## Description

This invention relates to metering systems for metering consumption of a service such as gas, electricity, water etc. supplied to a consumer. The invention also relates to a method of metering the consumption of a service. The following description will focus on gas meter systems, but it is to be understood that the invention can be applied to metering of other services.

Metering systems are known whereby the metering apparatus at the consumer's premises can be loaded with credit representing payment by the consumer for gas consumption. In such systems, the metering apparatus incorporates a cut-off valve which is selectively controllable to cut off the gas supply. The valve can thus be controlled to cut off the supply when the consumer's credit has expired, and to restore the supply when further credit is loaded to the apparatus. In early systems, credit was loaded by inserting coins or tokens. More recently, some form of portable data storage device, and in particular a memory card such as a magnetic stripe or smart card, has been employed to load the meter with credit. With these card operated systems, the consumer is generally required to take the card to a remote point of sale where payment is made and the card is loaded with credit in accordance with the payment. The card is then taken back to the consumer's premises and inserted in a card reader of the metering apparatus which reads the credit from the card. However credit is loaded to the apparatus, control means in the apparatus monitors gas consumption against available credit and activates the valve to cut off the gas supply when the consumer's credit has expired.

The gas meter at the consumer's premises may be located at an inconvenient site for access by the consumer to load the meter with credit. Accordingly, it will often be more convenient to provide a payment unit, which provides the consumer interface for loading of credit to the system, at a more convenient access location. To avoid complication of the meter circuitry, it is also desirable for the payment unit to control operation of the system generally, and in particular to monitor consumption measured by the meter against the available credit. Thus, a communications link must be provided between the meter and payment unit to enable the consumption measured by the meter to be communicated to the payment unit. Such communications of course involve consumption of power, so the power consumption of the apparatus depends on how frequently these communications are performed. WO96/03720 (Magyar Gazmero Technika) teaches of an apparatus for metering and dispensing a commodity.

According to the present invention there is provided a metering system comprising: a meter for metering consumption of a service by a consumer and generating consumption data indicative of said consumption; valve means, selectively settable to an open state, allowing supply of the service to the consumer, and a closed state in which the supply is cut off; payment means arranged for communication with the meter via a communications link, the payment means comprising input means for input of credit indicative of payment by the consumer, and a payment controller for monitoring consumption of the service against input credit; wherein the meter is arranged to transmit said consumption data to the payment means via the communications link, and wherein the system is arranged to control the state of the valve means in dependence on input of credit and to vary the frequency with which the meter transmits the consumption data in dependence on the state of the valve means; and wherein, when the valve means is closed, the meter transmits the consumption data with a predetermined minimum frequency greater than zero hertz..

In embodiments of the present invention, therefore, the frequency with which the consumption data is transmitted to the payment means is varied according to whether the valve means is open or closed. When the valve means is open, suitable intervals for transmission of the consumption data can be determined as required for effective operation of the system. When the valve means is closed, in the extreme case in some embodiments there may be no transmissions. In practice, however, it will generally be desirable for transmissions to continue at some minimum rate, e.g. at predetermined times as discussed further below. Either way, the facility to vary the frequency of transmissions according to the state of the valve means enables the power efficiency of the system to be improved. This is particularly advantageous in embodiments where the meter and/or payment means are battery powered, since a significant increase in battery life can be achieved.

While systems may be envisaged where the meter initiates consumption data transmissions, it is preferred that the meter is arranged to transmit the consumption data in response to a request from the payment means. In this case, the payment controller determines the times for transmission of the requests and hence the times for transmission of consumption data by the meter.

The payment controller uses the consumption data transmitted by the meter to monitor consumption of the service against the input credit. The state of the valve means is controlled accordingly, either directly by the payment controller or, as in the preferred embodiment described below, by the meter. The payment means may also be arranged to indicate an alarm condition to the consumer when the credit has expired, or more preferably a warning to the consumer when the credit is running low. In all cases, however, the payment controller must receive the consumption data sufficiently often to ensure that the valve means is closed when necessary and the required alarm or warning (where provided) is given to the consumer. Where the credit is running low and may be used up by a relatively short period of consumption, the payment means will need to receive the consumption data to check the credit situation sooner than the situation where there is plenty of credit still available for use in the system. Thus, in preferred embodiments, when the valve is open, the frequency with which the meter transmits the consumption data to the payment means is further varied in dependence on the unused credit. This variation in the frequency of communication of the consumption data when the valve is open allows further improvement of the power consumption efficiency.

The frequency of communication of the consumption data is preferably varied by setting the time interval to the next transmission in dependence on the unused credit each time the consumption data is transmitted. Thus, on receipt of the consumption data the payment controller can determine the appropriate time interval before the next transmission should occur. This can be done by calculating the time interval after which the current unused credit would be reduced to a predetermined value assuming consumption occurs at a reference consumption rate. This predetermined value could be zero in some embodiments, but more preferably corresponds to the credit threshold at which a low credit warning is indicated to the consumer. The reference consumption rate used by the payment controller to calculate the transmission interval may be a predefined fixed rate, eg. the average consumption rate of an average customer, or the maximum possible flow rate for example. Alternatively, the reference consumption rate could be varied by the payment controller in dependence on predefined criteria, for example the average consumption rate of the particular consumer over the recent period, or in dependence on the expected variation in consumption according to the time of year.

As indicated above, in some embodiments the payment controller may control the valve means directly in dependence on the credit situation. However, in the preferred embodiment to be described below the state of the valve means is controlled by the meter, and in such embodiments the meter is arranged to transmit status data, indicating the current state of the valve means, to the payment means with the consumption data. The status data may also indicate operational status of the meter, eg. any fault conditions, or alarm conditions due to tampering with the meter.

Preferred embodiments of the invention will now be described, by way of example, with reference to the accompanying drawings in which:
Figure 1 is an overall schematic of a metering system embodying the invention; and
Figure 2 is a schematic block diagram of the payment controller of Figure 1.

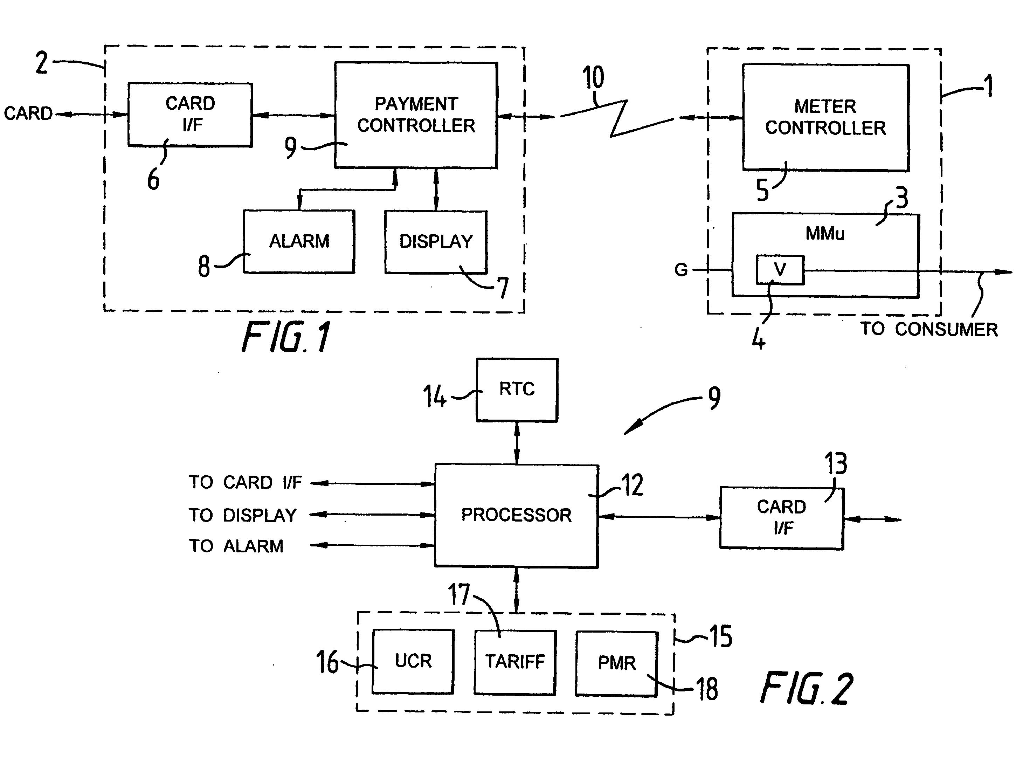

The metering system of Figure 1 comprises a gas meter 1 and a payment unit 2. The meter 1 comprises a basic mechanical meter unit (MMU) 3 which meters the gas supply G. The MMU 3 incorporates a cut-off valve 4 which can be opened and closed to enable and disable the supply to the consumer. The meter 1 also includes a meter controller 5 which receives the output pulses (indicating consumption of a fixed volume of gas) from the MMU 3. The meter controller 5 maintains a record of the meter reading in an internal memory (not shown) and controls operation of the valve 4 in the MMU 3.

The payment unit 2 includes a card interface 6 of generally known type for transfer of data with a memory card, such as a smart card or magnetic stripe card, when the card is inserted in a slot (not shown) of the unit. The payment unit 2 also includes a display 7 for displaying messages, instructions etc. to the consumer, and an audible alarm 8 for generating a warning to the consumer when required. A payment controller 9 controls operation of the card interface 6, display 7 and alarm 8. The payment controller 9 can communicate with the meter controller 5 via a communications link indicated schematically at 10. The communications link 10 may be a wireless link, or a hard-wired connection such a twisted pair two-wire link, as desired for a particular application. In this embodiment, the payment unit 2 and meter 1 communicate via the link 10 using a master-slave relationship where the payment unit 2 is the master and the meter 1 is the slave. The meter 1 cannot initiate communications, it can only respond to a request from the payment unit 2 for data as described further below. The payment unit 2 and meter 1 are powered by batteries (not shown).

Figure 2 is a more detailed schematic of the payment controller 9. As illustrated, the payment controller 9 includes a processor 12 for performing the various processing operations required by the system. The processor 12 is connected to the card interface 6 for transmission of data to and from the card, and to the display 7 and alarm 8 for controlling operation thereof. The processor 12 is also connected to a link interface 13 which transmits data over the link 10 to the meter controller 5, and receives data sent by the meter controller 5 over the link 10. A similar link interface is provided in the meter controller 5 for handling data communications at the meter end. A real time clock (RTC) 14 is connected to the processor 12 to enable the passage of time to be monitored.

The processor 12 is also provided with a non-volatile memory 15 for storage of various data required for operation of the system. The main data items required for operation of the present embodiment are indicated schematically at 16 to 18. The unused credit "register" (UCR) 16 is maintained by the processor 12 and stores the value of the unused credit, ie. credit still available for use in the system, as determined at the last update point. The UCR 16 is periodically updated to account for consumption as described below, and also on input of new credit by the consumer. The UCR 16 may also be decremented from time to time by the processor 12 to account for standing charges etc. The memory 15 also stores a tariff 17 indicating the current price rates to applied to consumption, including standing charges etc. to be applied by the processor 12. The tariff 17 can be updated by the utility company by writing new tariff data to the consumer's card during a credit transaction, this data then being transferred to the processor 12 at the next credit loading operation. The memory 15 also stores a previous meter reading (PMR) 18 which indicates the reading of the meter 1 at a previous point in time. Depending on the tariff system, the PMR may be the meter reading at the last communication, or the reading at the start of a billing cycle as discussed further below. The PMR 18 is accessed by the processor 12 when a new meter reading is received to determine the amount of consumption since the previous reading, and the processor 12 stores the appropriate meter readings as the PMR 18 when required.

The payment unit 2 is generally located remotely from the meter 1 at a convenient position for access by the consumer. When the consumer wishes to purchase credit, he takes the card to a remote point of sale where the desired payment is made, and the corresponding credit is loaded onto the card by means of a card interface unit at the point of sale. After loading the card with credit, the consumer returns to the payment unit 2 and inserts the card in the card interface 6 whereupon the purchased credit is loaded to the payment controller 9. It will be appreciated that the "credit" can be represented in various ways, eg. a monetary value, consumption units such as kilowatt hours (kWh) of energy or even an allowed time for gas consumption. In this example, however, the credit is represented as a monetary value.

The state of the valve 4 is controlled by the metering system in dependence on the consumer's credit. To avoid complexity of the meter circuitry, the monitoring of consumption against input credit is performed by the payment controller 9. The payment controller therefore needs to receive consumption data, in this case in the form of meter readings, from the meter controller 5 at suitable intervals to enable monitoring of the credit situation. In some embodiments, the payment controller 9 could control the valve 4 directly, by transmitting a valve control signal to the meter controller 5 when the valve 4 is to be closed or opened. However, if there were a failure in the communications link 10, the situation could arise where the value 4 remained open even though the consumer's credit had expired because the payment controller 9 was unable to transmit the valve closure signal. Accordingly, in this embodiment, when the payment controller receives a meter reading from the meter controller 5, the payment controller determines the volume of gas consumption allowed according to the current unused credit, and transmits a "gas volume limit" to the meter controller 5. The gas volume limit corresponds to the meter reading at which the current unused credit will expire. Unless the meter controller 5 receives an updated gas volume limit from the payment unit, the meter controller 5 will close the valve 4 when the actual meter reading reaches the gas volume limit. This ensures that the valve 4 will not remain open indefinitely even in the event of a communications failure.

As indicated above, the payment controller must receive the meter readings from the meter 1 sufficiently often to enable the credit situation to be monitored. Thus, at suitable intervals as described below, the payment controller 9 polls the meter controller 5 by sending a request signal via the link 10. The meter controller 5 responds to this request by sending the current meter reading, together with status data indicating (a) the current state of the valve, ie. opened or closed, and (b) the operating condition of the meter, eg. whether there are any faults or an alarm condition due to tampering with the meter. The operation is then as follows.

Assume that the response from the meter controller indicates that the valve 4 is open and that there are no faults. (In the event of a fault, the payment controller 9 would activate the alarm 8 and display a suitable message on the display 7 to instruct the consumer to call the service engineer). The processor 12 in the payment controller compares the current meter reading to the previous meter reading stored in the PMR 18 to determine the consumption since the previous reading. The processor 12 then determines the cost of this consumption according to the tariff 17, and updates the unused credit in the UCR 16 to account for the cost of consumption thus far. The processor 12 then calculates the new gas volume limit to be sent to the meter controller 5 in accordance with the new value of the unused credit. For example, assuming:
Unused credit = $20.00
Price rate according to tariff = $ 0.02 per cubic foot of gas (1 cubic foot = 0,0283 m³)
Current metering reading = 0031540 cubic feet

Then:
Allowed consumption = 20/0.02 = 1000 cubic feet
Gas volume limit = 0031540 plus 1000 = 0032540

The new gas volume limit is then transmitted to the meter controller 5 which stores the reading in its internal memory in place of the previous gas volume limit. If the gas volume limit is not updated by a subsequent transmission, the meter controller will close the valve 4 when the meter reading reaches 0032540.

It will be appreciated that, if consumption is charged to the consumer at a basic fixed rate, then the PMR may be simply the meter reading at the last poll, and the processor 12 may update the UCR 16 by subtracting the cost of consumption since the previous poll each time a new reading is received. In this case, the gas volume limit sent to the meter controller 5 will only change with input of new credit or subtraction of standing charges etc. from the UCR 16. However, the tariff 17 may be consumption based, so that the price rate applied to consumption varies according to the level of consumption by the consumer, generally decreasing with increasing consumption. For example, the overall price rate may be determined by the average daily consumption by the consumer from the start of a predetermined billing cycle. In this case, the PMR 18 is the meter reading stored by the processor at the start of the billing cycle and the processor applies the tariff 17 in accordance with the average daily consumption since that point. The value of the unused credit will then depend on the calculated cost to-date as compared with the total credit input since the start of the billing cycle, and the processor 12 would maintain a record of the total credit input, and number of days since the start of the billing cycle, in the memory 15. The specifics of this system are not central to the present embodiment and so will not be described in detail here. Suffice to say that the unused credit stored in the UCR 16 may be varied in dependence on past consumption, and hence the gas volume limit sent to the meter controller 5 may vary accordingly.

After sending the gas volume limit to the meter controller 5, the processor 12 determines the appropriate time interval till the next poll should take place. This is determined in dependence on the unused credit stored in the UCR 16. The payment controller 2 must warn the consumer when the credit falls to a threshold value to give the consumer an opportunity to input further credit before the valve is closed. This alarm is given by the processor 12 activating the alarm 8 and displaying a low credit warning on the display 7 when the credit falls to the alarm threshold value. Thus, to determine the appropriate polling interval, the processor 12 calculates the time it would take to reduce the current value of the unused credit to the alarm threshold value assuming consumption at a reference consumption rate. In this example, the reference rate is predefined in the processor 12 as the maximum possible gas flow rate. However, the reference rate could be determined in a number of ways, for example as the average flow rate of a typical user, or a variable rate based on the average consumption rate of the particular consumer over a predetermined preceding period. In addition, the reference rate could be selected by the processor- in accordance with the time of year, a higher rate being selected for winter months, when high consumption is expected, and a lower rate being selected for summer months. The calculation of the polling interval is illustrated by the following example.

Assuming:
Unused credit = $20.00
Alarm credit threshold = $ 2.00
Reference consumption rate = 250 ft3/hr
Cost according to tariff = $ 0.02/ft3

Then:
Allowed consumption till
credit threshold = (20 - 2)/0.02 = 900 ft3
Time for allowed consumption at reference consumption rate = 900/250 = 3.6 hours

Thus, the polling interval is set at 3.6 hours, and the processor 12 will poll the meter controller again when 3.6 hours has elapsed as indicated by the RTC 14.

It will be seen that the polling interval is varied by the processor 12 according to the amount of unused credit. Thus, where there is plenty of available credit, polling will be performed less often than when credit is running low. The polling interval can be varied by the processor 12 between a maximum interval of, say 6 hours, and a minimum interval of, say, 15 minutes. The maximum interval is selected as the longest acceptable delay before meter faults etc. are indicated the payment unit 2. The minimum value is selected based on the acceptable leeway in providing the low credit warning to the consumer. Thus, if the polling interval time determined by the above calculation is greater than 6 hours then the processor 12 will set the polling interval to 6 hours. If the polling interval time is calculated as less than 15 minutes, the low credit warning is given immediately, and the processor will poll the meter again after 15 minutes.

After the low credit warning is given, if the consumer inputs further credit before the gas volume limit is reached and the valve is closed by the meter controller 5, then, on input of the credit, the payment controller will again poll the meter controller 5. The processor 12 then updates the UCR 16 in accordance with the new input credit, and transmits the new gas volume limit to the meter controller 5. The appropriate polling interval till the next poll will be determined as described above. If no credit is loaded before the gas volume limit is reached, the valve 4 will be closed by the meter controller 5. When the payment controller 9 next polls the meter 1, the status data will indicate that the valve 4 is closed. While the valve is closed, the processor 12 will only poll the meter controller 5 with a much lower frequency, eg. at predetermined times such as midnight of each day. This daily poll allows credit adjustments to be performed where consumption based tariffs are implemented as mentioned above, and also maintains a minimum level of communication for meter status data such as fault indications etc. When new credit is subsequently loaded to the system, the payment controller 9 again polls the meter controller 5 and calculates the new gas volume limit as described above in dependence on the input credit. When this is transmitted to the meter controller 5, the meter controller opens the valve 4 and operation continues as described above. (Alternatively, the consumer may be required to press a button (not shown) on the payment unit 2 to trigger opening of the valve. As credit is available, the payment controller 9 transmits a control signal to the meter controller to trigger opening of the valve when the button is pressed).

It will be seen that, in the above embodiment, the frequency with which the payment controller 9 polls the meter 1 is varied in dependence on whether the valve 4 is open or closed. In addition, when the valve 4 is open, the frequency of polling is further varied in dependence on the unused credit. This variation of the polling frequency provides highly efficient use of power, allowing reliable operation while maximising battery life.

It will of course be appreciated that many variations and modifications may be made to the specific embodiment described above without departing from the scope of the invention as defined by the claims. For example, an emergency credit facility may be provided whereby, when the consumer's credit has expired, a predetermined further quantity/time period of supply may be allowed eg. if the consumer presses an emergency credit button on the payment unit 2. The cost of this can be subtracted from the next credit input by the processor 12. Further, while a gas meter system has been specifically described, it will be appreciated that the invention may be applied to metering of other services where supply of the service is controlled in accordance with input credit.

## Claims

1. A metering system comprising:
a meter (3) for metering consumption of a service by a consumer and generating consumption data indicative of said consumption;
valve means (14), selectively settable to an open state, allowing the supply of the service to the consumer, and a closed state in which the supply is cut off;
payment means (2) arranged for communication with the meter via a communications link (10), the payment means comprising input means (6) for input of credit indicative of payment by the consumer, and a payment controller (9) for monitoring consumption of the service against input credit; and,
wherein the meter is arranged to transmit said consumption data to the payment means via the communications link,
**characterised in that** the system is arranged to control the state of the valve means in dependence on input credit and to vary the frequency with which the meter transmits the consumption data in dependence on the state of the valve means; and
wherein, when the valve means is closed, the meter transmits the consumption data with predetermined minimum frequency greater than zero hertz.

2. A metering system as claimed in claim 1 wherein, the predetermined minimum frequency is at least once per day.

3. A metering system as claimed in claim 1 or claim 2 wherein, when the valve means is open, the system is arranged to vary the frequency with which the meter (3) transmits the consumption data in dependence on unused input credit.

4. A metering system as claimed in claim 3 wherein, on receipt of the consumption data by the payment means, the payment controller (9) determines the time interval after which the next transmission of consumption data should occur.

5. A metering system as claimed in claim 4 wherein the payment controller (9) determines said time interval in dependence on the time after which the unused credit would be reduced to a predetermined value by consumption at a reference consumption rate.

6. A metering system as claimed in claim 5 wherein said time interval is variable between predetermined minimum and maximum time intervals.

7. A metering system as claimed in claim 5 or claim 6 wherein the payment means includes indicator means (8) for indicating a low credit warning to the consumer, said predetermined value defining the threshold for activation of said indicator means to generate said warning.

8. A metering system as claimed in any one of claims 5 to 7 wherein the payment controller (9) is operable to vary said reference consumption rate in accordance with predefined criteria.

9. A metering system as claimed in any preceding claim wherein the meter is arranged to transmit the consumption data in response to a request transmitted by the payment means, the payment controller determining the times for transmission of a said request.

10. A metering system as claimed in claim 9 wherein the payment means is arranged to transmit a said request to the meter in response to input of a new credit by the consumer.

11. A metering system as claimed in claim 9 or claim 10 wherein the state of the valve means is controlled by the meter, and wherein the meter is arranged to transmit status data, comprising data indicating the state of the valve means, to the payment means with said consumption data.

12. A metering system as claimed in any preceding claim wherein the meter is arranged to generate consumption data and status data and to transmit said status data and said consumption data in dependence on the state of said valve means.

13. A metering system as claimed in claim 12, wherein said status data includes data indicative of a fault condition.

14. A metering system as claimed in claim 12 or claim 13, wherein said status data included data indicative of an alarm condition.

15. A metering system as claimed in claim 12 or claim 13 or claim 14, wherein said status data includes data indicative of the state of said valve means.

16. A metering system as claimed in any preceding claim wherein the meter and/or payment means are battery powered.

17. A metering system as claimed in any preceding claim wherein the meter is a gas meter and the valve means is a gas valve.

18. A method of metering the consumption of a service by a consumer and generating consumption data indicative of said consumption in a metering system comprising a meter (3) for metering consumption of said service, valve means (4), operable to control supply of service between an open state and a closed state; payment means (2) arranged for communication with the meter via a communications link (10), the payment means comprising input means (6) for input of credit indicative of payment by the consumer, and a payment controller (9) for monitoring consumption of the service with regard to input credit; the method comprising the steps:
i) metering consumption of the service;
ii) monitoring consumption of the service;
iii) transmitting consumption data to the payment means via the communications link;
iv) controlling the state of the valve in dependence on input credit; and,
v) varying the frequency of transmission of data in dependence on the state of the valve means.

## Patentansprüche

1. Ein Zählersystem bestehend aus:
einem Zähler (3) zur Messung der von einem Verbraucher bezogenen Menge eines Verbrauchsmediums und zur Erzeugung von für besagten Verbrauch aussagekräftigen Verbrauchsdaten;
einer Ventilvorrichtung (14), die wahlweise in einen offenen Zustand, in welchem der Verbraucher mit dem Verbrauchsmedium versorgt wird, und in einen geschlossenen Zustand, in welchem die Versorgung unterbrochen ist, geschaltet werden kann;
einer Zahlungsvorrichtung (2), die so ausgelegt ist, daß sie über eine Kommunikationsverbindung (10) mit dem Zähler kommuniziert, wobei die Zahlungsvorrichtung eine Eingabevorrichtung (6) zur Eingabe eines für die Bezahlung durch den Verbraucher aussagekräftigen Kredits und eine Zahlungskontrollvorrichtung (9) zur Überwachung des Medienverbrauchs in Bezug auf den eingegebenen Kredit umfaßt; und
wobei der Zähler so ausgelegt ist, daß er besagte Verbrauchsdaten über die Kommunikationsverbindung an die Zahlungsvorrichtung weiterleitet,
**dadurch gekennzeichnet, daß** das System so ausgelegt ist, daß es den Zustand der Ventilvorrichtung in Abhängigkeit von dem eingegebenen Kredit steuert und die Frequenz mit welcher der Zähler die Verbrauchsdaten überträgt in Abhängigkeit des Zustandes der Ventilvorrichtung verändert; und
wobei der Zähler bei geschlossener Ventilvorrichtung die Verbrauchsdaten mit einer festgelegten Mindestfrequenz größer als Null Hertz überträgt.

2. Ein Zählersystem nach Anspruch 1, wobei die festgelegte Mindestfrequenz wenigstens einmal pro Tag beträgt.

3. Ein Zählersystem nach Anspruch 1 oder Anspruch 2, wobei das System so ausgelegt ist, daß es bei geöffneter Ventilvorrichtung die Frequenz mit welcher der Zähler (3) die Verbrauchsdaten überträgt in Abhängigkeit von dem noch verfügbaren Eingabekredit verändert.

4. Ein Zählersystem nach Anspruch 3, wobei nach Erhalt der Verbrauchsdaten durch die Zahlungsvorrichtung die Zahlungskontrollvorrichtung (9) den Zeitabstand festlegt, in welchem die nächste Übertragung der Verbrauchsdaten stattfinden soll.

5. Ein Zählersystem nach Anspruch 4, wobei die Zahlungskontrollvorrichtung (9) besagten Zeitabstand in Abhängigkeit von der Zeit festlegt, in welcher der unverbrauchte Kredit unter Voraussetzung eines Referenzverbrauchs auf einen festgelegten Wert zurückgehen würde.

6. Ein Zählersystem nach Anspruch 5, wobei sich besagter Zeitabstand zwischen einem festgelegten Mindestwert und einem festgelegten Höchstwert verändern läßt.

7. Ein Zählersystem nach Anspruch 5 oder Anspruch 6, wobei die Zahlungsvorrichtung eine Anzeigevorrichtung (8) enthält, die bei Erreichen eines niedrigen Kreditwertes den Verbraucher warnt, wobei besagter festgelegter Wert die Aktivierungsschwelle besagter Anzeigevorrichtung zur Abgabe besagter Warnung bildet.

8. Ein Zählersystem nach einem der Ansprüche 5 bis 7, wobei die Zahlungskontrollvorrichtung (9) so betätigt werden kann, daß sie besagten Referenzverbrauch in Abhängigkeit festgelegter Kriterien verändert.

9. Ein Zählersystem nach einem der obigen Ansprüche, wobei der Zähler so ausgelegt ist, daß er die Verbrauchsdaten in Antwort auf eine durch die Zahlungsvorrichtung gesandte Aufforderung überträgt und wobei die Zahlungskontrollvorrichtung die Übertragungszeiten für besagte Aufforderung bestimmt.

10. Ein Zählersystem nach Anspruch 9, wobei die Zahlungsvorrichtung so ausgelegt ist, daß sie besagte Aufforderung an den Zähler als Antwort auf die Eingabe eines neues Kredits durch den Verbraucher abgibt.

11. Ein Zählersystem nach Anspruch 9 oder Anspruch 10, wobei der Zustand der Ventilvorrichtung durch den Zähler gesteuert wird und wobei der Zähler so ausgelegt ist, daß er zusammen mit den Verbrauchsdaten Zustandsdaten, einschließlich Daten über den Zustand der Ventilvorrichtung, an die Zahlungsvorrichtung überträgt.

12. Ein Zählersystem nach einem der obigen Ansprüche, wobei der Zähler so ausgelegt ist, daß er Verbrauchsdaten und Zustandsdaten erzeugt und besagte Verbrauchsdaten und besagte Zustandsdaten in Abhängigkeit von dem Zustand besagter Ventilvorrichtung überträgt.

13. Ein Zählersystem nach Anspruch 12, wobei besagte Zustandsdaten Daten einschließen, die auf einen Fehlerzustand hinweisen.

14. Ein Zählersystem nach Anspruch 12 oder Anspruch 13, wobei besagte Zustandsdaten Daten einschließen, die auf einen Alarmzustand hinweisen.

15. Ein Zählersystem nach Anspruch 12 oder Anspruch 13 oder Anspruch 14, wobei besagte Zustandsdaten Daten einschließen, die für den Zustand besagter Ventilvorrichtung aussagekräftig sind.

16. Ein Zählersystem nach einem der obigen Ansprüche, wobei der Zähler und/oder die Zahlungsvorrichtung durch eine Batterie mit Spannung versorgt werden.

17. Ein Zählersystem nach einem der obigen Ansprüche, wobei der Zähler ein Gaszähler und die Ventilvorrichtung ein Gasventil ist.

18. Ein Verfahren zur Messung der Bezugsmenge eines Verbrauchsmediums durch einen Verbraucher und zur Erzeugung von Verbrauchsdaten, die besagten Verbrauch in einem Zählersystem wiedergeben, das einen Zähler (3) zur Messung des besagten Medienverbrauchs, eine Ventilvorrichtung (4), die zur Steuerung der Medienzufuhr zwischen einem offenen und einem geschlossenen Zustand betätigt werden kann, eine Zahlungsvorrichtung (2), die zur Kommunikation mit dem Zähler über eine Kommunikationsverbindung (10) ausgelegt ist, wobei die Zahlungsvorrichtung eine Eingabevorrichtung (6) zur Eingabe eines für die Bezahlung durch den Verbraucher aussagekräftigen Kredits besitzt, und eine Zahlungskontrollvorrichtung (9) zur Überwachung des Medienverbrauchs in Bezug auf den Eingabekredit umfaßt, wobei das Verfahren folgende Schritte einschließt:
i) Messung des Medienverbrauchs;
ii) Überwachung des Medienverbrauchs;
iii) Übertragung der Verbrauchsdaten über die Kommunikationsverbindung an die Zahlungsvorrichtung;
iv) Kontrolle des Ventilzustandes in Abhängigkeit von dem Eingabekredit; und
v) Veränderung der Übertragungsfrequenz der Daten in Abhängigkeit von dem Zustand der Ventilvorrichtung.

## Revendications

1. Système de mesure comprenant :
un appareil de mesure (3) destiné à mesurer la consommation d'un service par un consommateur et à générer des données de consommation indicatrices de ladite consommation ;
un moyen à soupape (14) pouvant être réglé de façon sélective en un état ouvert, permettant l'apport du service au consommateur et en un état fermé, dans lequel l'apport est interrompu ;
un moyen de paiement (2) prévu pour communiquer avec l'appareil de mesure via une liaison de communication (10), le moyen de paiement comprenant un moyen d'entrée (6) permettant l'entrée de crédit indicateur du paiement par le consommateur, et un contrôleur de paiement (9) destiné à surveiller la consommation du service par rapport au crédit entré ; et
dans lequel l'appareil de mesure est conçu pour transmettre lesdites données de consommation au moyen de paiement via la liaison de communication,
**caractérisé en ce que** le système est conçu pour commander l'état du moyen à soupape en fonction du crédit entré et faire varier la fréquence selon laquelle l'appareil de mesure transmet les données de consommation en fonction de l'état du moyen à soupape ; et
dans lequel, lorsque le moyen à soupape est fermé, l'appareil de mesure transmet les données de consommation avec une fréquence minimum prédéterminée qui est supérieure à zéro Hertz.

2. Système de mesure tel que revendiqué dans la revendication 1, dans lequel la fréquence minimum prédéterminée est d'au moins une fois par jour.

3. Système de mesure tel que revendiqué dans la revendication 1 ou la revendication 2, dans lequel, lorsque le moyen à soupape est ouvert, le système est prévu pour faire varier la fréquence selon laquelle l'appareil de mesure (3) transmet les données de consommation en fonction du crédit entré non utilisé.

4. Système de mesure tel que revendiqué dans la revendication 3, dans lequel, à réception des données de consommation par le moyen de paiement, le contrôleur de paiement (9) détermine l'intervalle de temps après lequel doit se produire la transmission suivante des données de consommation.

5. Système de mesure tel que revendiqué dans la revendication 4, dans lequel le contrôleur de paiement (9) détermine ledit intervalle de temps en fonction du moment après lequel le crédit non utilisé sera réduit à une valeur prédéterminée par une consommation selon un taux de consommation de référence.

6. Système de mesure tel que revendiqué dans la revendication 5, dans lequel ledit intervalle de temps peut varier entre des intervalles de temps minimum et maximum prédéterminés.

7. Système de mesure tel que revendiqué dans la revendication 5 ou la revendication 6, dans lequel le moyen de paiement comprend un moyen indicateur (8) adressant au consommateur un avertissement de bas niveau de crédit, ladite valeur prédéterminée définissant le seuil d'activation dudit moyen indicateur pour qu'il génère ledit avertissement.

8. Système de mesure tel que revendiqué dans l'une quelconque des revendications 5 à 7, dans lequel le contrôleur de paiement (9) peut être commandé pour faire varier ledit taux de consommation de référence en fonction de critères prédéfinis.

9. Système de mesure tel que revendiqué dans l'une quelconque des revendications précédentes, dans lequel l'appareil de mesure est conçu pour transmettre les données de consommation en réponse à une demande transmise par le moyen de paiement, le contrôleur de paiement déterminant les moments de transmission d'une dite requête.

10. Système de mesure tel que revendiqué dans la revendication 9, dans lequel le moyen de paiement est conçu pour transmettre une dite requête au système de mesure en réponse à l'entrée d'un nouveau crédit par le consommateur.

11. Système de mesure tel que revendiqué dans la revendication 9 ou la revendication 10, dans lequel l'état du moyen à soupape est commandé par l'appareil de mesure, et dans lequel l'appareil de mesure est prévu pour transmettre des données d'état, y compris des données indiquant l'état du moyen à soupape, au moyen de paiement, avec lesdites données de consommation.

12. Système de mesure tel que revendiqué dans l'une quelconque des revendications précédentes, dans lequel l'appareil de mesure est conçu pour générer des données de consommation et des données d'état et pour transmettre lesdites données d'état et lesdites données de consommation en fonction de l'état dudit moyen à soupape.

13. Système de mesure tel que revendiqué dans la revendication 12, dans lequel lesdites données d'état comprennent des données indiquant un état de dysfonctionnement.

14. Système de mesure tel que revendiqué dans la revendication 12 ou la revendication 13, dans lequel lesdites données d'état comprennent des données indiquant un état d'alarme.

15. Système de mesure tel que revendiqué dans la revendication 12 ou la revendication 13 ou la revendication 14, dans lequel lesdites données d'état comprennent des données indicatrices de l'état dudit moyen à soupape.

16. Système de mesure tel que revendiqué dans l'une quelconque des revendications précédentes, dans lequel l'appareil de mesure et/ou le moyen de paiement sont alimentés par batterie.

17. Système de mesure tel que revendiqué dans l'une quelconque des revendications précédentes, dans lequel l'appareil de mesure est un compteur à gaz et le moyen à soupape est un robinet de gaz.

18. Procédé de mesure de la consommation d'un service par un consommateur et de génération de données de consommation indicatrices de ladite consommation dans un système de mesure, comprenant un appareil de mesure (3) destiné à mesurer la consommation dudit service, un moyen à soupape (4) pouvant fonctionner pour commander l'apport du service entre un état ouvert et un état fermé ; un moyen de paiement (2) disposé pour communiquer avec l'appareil de mesure via une liaison de communication (10), le moyen de paiement comprenant un moyen d'entrée (6) permettant d'entrer un crédit indicateur de paiement par le consommateur, et un contrôleur de paiement (9) destiné à surveiller la consommation du service eu égard au crédit entré ;
le procédé comprenant les étapes suivantes :
i) mesure de la consommation du service ;
ii) surveillance de la consommation du service ;
iii) transmission des données de consommation au moyen de paiement via la liaison de communication ;
iv) contrôle de l'état de la soupape en fonction du crédit entré ; et
v) variation de la fréquence de transmission des données en fonction de l'état du moyen à soupape.
